# EUROPEAN PATENT APPLICATION

(11) **EP 4 818 055 A1**
(43) Date of publication of application: **07.10.2026**
(21) Application number: 24929130.3
(22) Date of filing: 15.08.2024
(51) Int. Cl.: B65B 41/06, B65B 57/04, B65B 11/02, B65B 57/18, B65B 61/00, H01M 6/00, H01M 10/04

(54) **FILM WRAPPING APPARATUS AND METHOD FOR BATTERY CELL**

(30) Priority: 14.03.2024 CN 202410289069
(71) Applicant: Contemporary Amperex Technology Co., Limited, Ningde, Fujian 352100 (CN)
(72) Inventor: ZHENG, Zhijian, Ningde, Fujian 352100 (CN); FAN, Xiang, Ningde, Fujian 352100 (CN); WANG, Dongsheng, Ningde, Fujian 352100 (CN); DONG, Huihua, Ningde, Fujian 352100 (CN)
(74) Representative: Ziebig Hengelhaupt Intellectual Property Attorneys Patentanwaltskanzlei PartGmbB
(86) International application number: PCT/CN2024/112463
(87) International publication number: WO 2025/189678

(57) **Abstract**

A film wrapping apparatus and method for a battery cell. The film wrapping method comprises: in response to a first transfer mechanism reaching a packaging film feeding compartment, a control device controlling a first suction cup module to suction a packaging film in the packaging film feeding compartment, and controlling the first transfer mechanism to transfer the packaging film to a hot melting mechanism; the control device monitoring the vacuum pressure value of the first suction cup module, when the vacuum pressure value is less than a set threshold, determining that the packaging film falls off, and controlling the first transfer mechanism to return to the packaging film feeding compartment so as to re-suction a packaging film; in response to the packaging film being transferred to the hot melting mechanism, the control device controlling the hot melting mechanism to pretreat the packaging film to obtain a pretreated packaging film; and controlling a second transfer mechanism to transfer the pretreated packaging film to a wrapping mechanism, and controlling the wrapping mechanism to use the pretreated packaging film to perform wrapping. According to the film wrapping apparatus and method, it is monitored in real time whether packaging films fall off, thereby mitigating the problem of abnormal quality of battery cells caused by falling-off of the packaging films, and thus improving the production efficiency of the battery cells.

## Description

### CROSS-REFERENCE TO RELATED APPLICATIONS

The present application claims priority to Chinese Patent Application No. 202410289069.4 filed on March 14, 2024 and entitled "WRAPPING APPARATUS AND WRAPPING METHOD FOR BATTERY CELL", which is incorporated by reference in its entirety.

### TECHNICAL FIELD

The present disclosure relates to the technical field of battery production, and in particular, to a film wrapping apparatus and method for a battery cell.

### BACKGROUND

This section aims to provide a background or context for the implementations of the present disclosure. The description herein is not acknowledged as the prior art simply because it is included in this section.

New energy batteries are increasingly applied to life and industry. For example, new energy vehicles with batteries have been widely used. In addition, batteries are further increasingly applied to the field of energy storage.

During production of a battery cell, after assembling of a bare battery cell is completed, there is a casing procedure. When the bare battery cell is placed into a case, to protect the bare battery cell and achieve an insulation function, an outer surface of the bare battery cell can be wrapped by a layer of packaging film, and the packaging film is bonded to different surfaces of the bare battery cell and avoid an extension position of a tab. In the related technology, in a process of automatically wrapping the packaging film, falling-off of the packaging film will lead to abnormal quality of the battery cell. Moreover, manual operations are required after the packaging film falls off. This reduces the production efficiency.

### SUMMARY

In view of this, the embodiments of the present disclosure expect to provide a film wrapping apparatus and method for a battery cell, which can mitigate a problem of abnormal quality of the battery cell due to falling-off of a packaging film and enhance the production efficiency of the battery cell.

To achieve the above objectives, a first aspect of the embodiments of the present disclosure provides a film wrapping method for a battery cell, applied to a film wrapping apparatus for a battery cell. The film wrapping apparatus includes a control device, a packaging film feeding compartment, a first transfer mechanism with a first suction cup module, a second transfer mechanism, a hot melt mechanism, and a wrapping mechanism. The film wrapping method includes:

In response to the first transfer mechanism reaching the packaging film feeding compartment, the control device controls the first suction cup module to suck a packaging film in the packaging film feeding compartment, and controls the first transfer mechanism to transfer the packaging film to the hot melt mechanism.

The control device monitors a vacuum pressure value of the first suction cup module, determines, when the vacuum pressure value is less than a set threshold, that the packaging film falls off, and controls the first transfer mechanism to return to the packaging film feeding compartment to re-suck the packaging film.

In response to the packaging film being transferred to the hot melt mechanism, the control device controls the hot melt mechanism to pretreat the packaging film to obtain a pretreated packaging film.

The control device controls the second transfer mechanism to transfer the pretreated packaging film to the wrapping mechanism, and controls the wrapping mechanism to use the pretreated packaging film to perform wrapping.

According to the film wrapping method for a battery cell provided in the embodiments of the present disclosure, first, after the first transfer mechanism reaches the packaging film feeding compartment, the control device controls the first suction cup module to suck the packaging film in the packaging film feeding compartment, and then controls the first transfer mechanism to transfer the packaging film to the hot melt mechanism. In addition, in the process that the first transfer mechanism transfers the packaging film to the hot melt mechanism, the control device monitors the vacuum pressure value of the first suction cup module, determines, if the vacuum pressure value is not less than the set threshold, that the packaging film does not fall off, and controls the first transfer mechanism to continue to transfer the packaging film to the hot melt mechanism until the packaging film is placed on the hot melt mechanism; and determines, if the vacuum pressure value is less than the set threshold, that the packaging film falls off, and controls the first transfer mechanism to return to the packaging film feeding compartment to re-suck the packaging film. In this way, in one aspect, by monitoring the vacuum pressure value of the first suction cup module, the control device determines, based on whether the vacuum pressure value is less than the set threshold, whether the packaging film falls off, so that real-time monitoring on whether the packaging film falls off can be achieved, and a problem of abnormal quality of the battery cell due to falling-off of the packaging film is mitigated. In another aspect, after determining that the packaging film falls off, by controlling the first transfer mechanism to return to the packaging film feeding compartment to re-suck the packaging film, the control device automatically handles with an abnormal situation of the falling-off of the packaging film, without shutdown. This reduces the labor costs and enhances the production efficiency of the battery cell.

In some embodiments, the hot melt mechanism includes a hot melt platform and a hot melt suction cup assembly arranged at the hot melt platform.

That in response to the packaging film being transferred to the hot melt mechanism, the control device controls the hot melt mechanism to pretreat the packaging film to obtain a pretreated packaging film includes:

In response to the packaging film being transferred to the hot melt platform, the control device controls the hot melt suction cup assembly to suck the packaging film, monitors a vacuum pressure value of the hot melt suction cup assembly, and determines, when the vacuum pressure value is less than the set threshold, that the packaging film falls off.

The control device controls the hot melt mechanism to pretreat the packaging film to obtain the pretreated packaging film.

By configuring the hot melt mechanism to include the hot melt platform and the hot melt suction cup assembly arranged at the hot melt platform, the packaging film can be pretreated on the hot melt platform, and the pretreated packaging film can be obtained. The hot melt suction cup assembly is configured to suck the packaging film, to mitigate the problem of the abnormal quality of the battery cell due to the falling-off of the packaging film in the pretreating process. The control device can be configured to monitor a vacuum pressure value of the hot melt suction cup assembly. It can be understood that when the vacuum pressure value of the hot melt suction cup assembly is less than the set threshold, a suction force of the hot melt suction cup assembly decreases until it is insufficient to suck the packaging film, thus determining that the packaging film falls off.

In some embodiments, the film wrapping apparatus further includes a warning apparatus. In response to detecting that the packaging film falls off from the hot melt suction cup assembly at least once, the control device controls the warning apparatus to send a warning signal.

Herein, if the control device detects that the packaging film falls off from the hot melt suction cup assembly at least once, it indicates that the film wrapping apparatus may possibly fail, and the warning apparatus sends the warning signal, so that an operator can go to the site to inspect and troubleshoot the failure. It is conductive for timely troubleshooting to lower the impact on the production efficiency as much as possible. Exemplarily, the operator can selectively shut down the film wrapping apparatus for inspection.

In some embodiments, the second transfer mechanism has a second suction cup module.

That the control device controls the second transfer mechanism to transfer the pretreated packaging film to the wrapping mechanism includes:

The control device controls the second suction cup module to suck the pretreated packaging film, and controls the second transfer mechanism to transfer the pretreated packaging film to the wrapping mechanism.

The control device monitors a vacuum pressure value of the second suction cup module, determines, when the vacuum pressure value is less than a set threshold, that the pretreated packaging film falls off, and controls the second transfer mechanism to return to the hot melt mechanism to re-suck the pretreated packaging film.

The control device can be configured to monitor the vacuum pressure value of the second suction cup module in the process that the second transfer mechanism transfers the pretreated packaging film to the wrapping mechanism. By the arrangement of the second suction cup module, in the process that the second transfer mechanism transfers the pretreated packaging film to the wrapping mechanism, the second suction cup module can be configured to suck the pretreated packaging film. When the vacuum pressure value of the second suction cup module is less than the set threshold, a suction force of the second suction cup module decreases until it is insufficient to suck the pretreated packaging film, thus determining that the pretreated packaging film falls off. This mitigates the problem of the abnormal quality of the battery cell due to the falling-off of the pretreated packaging film in the process of transferring the pretreated packaging film to the wrapping mechanism.

In some embodiments, the film wrapping apparatus further includes a warning apparatus. In response to detecting that the pretreated packaging film falls off from the second suction cup module at least once, the control device controls the warning apparatus to send a warning signal.

Herein, if the control device detects that the packaging film falls off from the second suction cup mode at least once, it indicates that the film wrapping apparatus may possibly fail, and the warning apparatus sends the warning signal, so that an operator can go to the site to inspect and troubleshoot the failure. It is conductive for timely troubleshooting to lower the impact on the production efficiency as much as possible. Exemplarily, the operator can selectively shut down the film wrapping apparatus for inspection.

In some embodiments, the second transfer mechanism further includes a first detection unit. The control device controls the first detection unit to detect whether the pretreated packaging film on the second transfer mechanism falls off.

In the process that the second transfer mechanism transfers the pretreated packaging film to the wrapping mechanism, the control device can control the first detection unit to detect whether the pretreated packaging film on the second transfer mechanism falls off. This mitigates the problem of the abnormal quality of the battery cell due to the falling-off of the pretreated packaging film in the process of transferring the pretreated packaging film to the wrapping mechanism.

In some embodiments, the first detection unit is a diffuse reflection detection switch.

In some embodiments, the wrapping mechanism includes a second detection unit.

The controlling the wrapping mechanism to use the pretreated packaging film to perform wrapping includes:
In response to the pretreated packaging film being transferred to a wrapping station of the wrapping mechanism, the control device controls the wrapping mechanism to use the pretreated packaging film to perform wrapping, and
controls the second detection unit to detect whether the pretreated packaging film on the wrapping station falls off.

In the process that the wrapping mechanism uses the pretreated packaging film to perform wrapping, the control device can control the second detection unit to detect whether the pretreated packaging film on the wrapping mechanism falls off. This mitigates the problem of the abnormal quality of the battery cell due to the falling-off of the pretreated packaging film in the process of wrapping of the pretreated packaging film.

In some embodiments, the second detection unit is a diffuse reflection detection switch.

In some embodiments, the film wrapping apparatus further includes a warning apparatus. In response to detecting that the packaging film falls off from the first suction cup module at least once, the control device controls the warning apparatus to send a warning signal.

Herein, if the control device detects that the packaging film falls off from the first suction cup module at least once, it indicates that the film wrapping apparatus may possibly fail, and the warning apparatus sends the warning signal, so that an operator can go to the site to inspect and troubleshoot the failure. It is conductive for timely troubleshooting to lower the impact on the production efficiency as much as possible. Exemplarily, the operator can selectively shut down the film wrapping apparatus for inspection.

A second aspect of the embodiments of the present disclosure provides a film wrapping apparatus for a battery cell, including:
a control device;
a packaging film feeding compartment configured to store a packaging film;
a hot melt mechanism configured to pretreat the packaging film to obtain a pretreated packaging film;
a wrapping mechanism configured to use the pretreated packaging film to perform wrapping;
a first transfer mechanism with a first suction cup module, where the control device is configured to: control the first suction cup module to suck the packaging film in the packaging film feeding compartment and control the first transfer mechanism to transfer the packaging film to the hot melt mechanism; the control device is further configured to: monitor a vacuum pressure value of the first suction cup module, determine, when the vacuum pressure value is less than a set threshold, that the packaging film falls off, and control the first transfer mechanism to return to the packaging film feeding compartment to re-suck the packaging film; and
a second transfer mechanism. The control device controls the second transfer mechanism to transfer the pretreated packaging film to the wrapping mechanism.

According to the film wrapping apparatus for a battery cell provided in the embodiments of the present disclosure, first, after the first transfer mechanism reaches the packaging film feeding compartment, the control device controls the first suction cup module to suck the packaging film in the packaging film feeding compartment, and then controls the first transfer mechanism to transfer the packaging film to the hot melt mechanism. In addition, in the process that the first transfer mechanism transfers the packaging film to the hot melt mechanism, the control device monitors the vacuum pressure value of the first suction cup module, determines, if the vacuum pressure value is not less than the set threshold, that the packaging film does not fall off, and controls the first transfer mechanism to continue to transfer the packaging film to the hot melt mechanism until the packaging film is placed on the hot melt mechanism; and determines, if the vacuum pressure value is less than the set threshold, that the packaging film falls off, and controls the first transfer mechanism to return to the packaging film feeding compartment to re-suck the packaging film. In this way, in one aspect, by monitoring the vacuum pressure value of the first suction cup module, the control device determines, based on whether the vacuum pressure value is less than the set threshold, whether the packaging film falls off, so that real-time monitoring on whether the packaging film falls off can be achieved, and a problem of abnormal quality of the battery cell due to falling-off of the packaging film is mitigated. In another aspect, after determining that the packaging film falls off, by controlling the first transfer mechanism to return to the packaging film feeding compartment to re-suck the packaging film, the control device automatically handles with an abnormal situation of the falling-off of the packaging film, without shutdown. This reduces the labor costs and enhances the production efficiency of the battery cell.

In some embodiments, the hot melt mechanism includes a hot melt platform and a hot melt suction cup assembly arranged at the hot melt platform.

The hot melt platform is configured to carry the packaging film. The control device is configured to: control the hot melt suction cup assembly to suck the packaging film, monitor a vacuum pressure value of the hot melt suction cup assembly, and determine, when the vacuum pressure value is less than the set threshold, that the packaging film falls off.

By configuring the hot melt mechanism to include the hot melt platform and the hot melt suction cup assembly arranged at the hot melt platform, the packaging film can be pretreated on the hot melt platform, and the pretreated packaging film can be obtained. The hot melt suction cup assembly is configured to suck the packaging film to reduce the possibility of falling-off of the packaging film in the pretreating process. The control device can be configured to monitor the vacuum pressure value of the hot melt suction cup assembly. When the vacuum pressure value of the hot melt suction cup assembly is less than the set threshold, a suction force of the hot melt suction cup assembly decreases until it is insufficient to suck the packaging film, thus determining that the packaging film falls off. This mitigates the problem of the abnormal quality of the battery cell due to the falling-off of the packaging film in the pretreating process.

In some embodiments, the second transfer mechanism has a second suction cup module.

The control device is configured to: control the second suction cup module to suck the pretreated packaging film, monitor a vacuum pressure value of the second suction cup module, and determine, when the vacuum pressure value is less than a set threshold, that the pretreated packaging film falls off.

The control device can be configured to monitor the vacuum pressure value of the second suction cup module in the process that the second transfer mechanism transfers the pretreated packaging film to the wrapping mechanism. By the arrangement of the second suction cup module, in the process that the second transfer mechanism transfers the pretreated packaging film to the wrapping mechanism, the second suction cup module can be configured to suck the pretreated packaging film. This mitigates the problem of the abnormal quality of the battery cell due to the falling-off of the pretreated packaging film in the process of transferring the pretreated packaging film to the wrapping mechanism. The control device can be configured to monitor the vacuum pressure value of the second suction cup module. It can be understood that when the vacuum pressure value of the second suction cup module is less than the set threshold, a suction force of the second suction cup module decreases until it is insufficient to suck the pretreated packaging film, thus determining that the pretreated packaging film falls off.

In some embodiments, the second transfer mechanism further includes a first detection unit arranged on one side of the second suction cup module; and the first detection unit is configured to detect whether the pretreated packaging film on the second suction cup module falls off.

In the process that the second transfer mechanism transfers the pretreated packaging film to the wrapping mechanism, the control device can control the first detection unit to detect whether the pretreated packaging film on the second transfer mechanism falls off. This mitigates the problem of the abnormal quality of the battery cell due to the falling-off of the pretreated packaging film in the process of transferring the pretreated packaging film to the wrapping mechanism.

In some embodiments, the wrapping mechanism includes a wrapping station and a second detection unit arranged on one side of the wrapping station. The second detection unit is configured to detect whether the pretreated packaging film on the wrapping station falls off.

In the process that the wrapping mechanism uses the pretreated packaging film to perform wrapping, the control device can control the second detection unit to detect whether the pretreated packaging film on the wrapping mechanism falls off. This mitigates the problem of the abnormal quality of the battery cell due to the falling-off of the pretreated packaging film in the process of wrapping of the pretreated packaging film.

### BRIEF DESCRIPTION OF THE DRAWINGS

FIG. 1 is a schematic diagram of an implementation flow of a film wrapping method for a battery cell according to an embodiment of the present disclosure;
FIG. 2 is a diagram of a structure of a film wrapping apparatus for a battery cell according to an embodiment of the present disclosure;
FIG. 3 is a schematic diagram of a structure of a first transfer mechanism and a packaging film feeding compartment according to an embodiment of the present disclosure;
FIG. 4 is a schematic diagram of a structure of a second transfer mechanism according to an embodiment of the present disclosure;
FIG. 5 is a schematic diagram of a structure of a hot melt mechanism according to an embodiment of the present disclosure; and
FIG. 6 is a schematic diagram of a structure of a wrapping mechanism according to an embodiment of the present disclosure.

### Descriptions of reference numerals:

1: packaging film feeding compartment; 2: first transfer mechanism; 21: first suction cup module; 22: first linear module; 3: second transfer mechanism; 31: second suction cup module; 32: first detection unit; 33: second linear module; 4: hot melt mechanism; 41: hot melt platform; 42: hot melt suction cup assembly; 5: wrapping mechanism; 51: second detection unit; 52: wrapping portion; 53: third linear module; 10: film wrapping apparatus; 20: packaging film.

### DETAILED DESCRIPTION

It should be noted that the embodiments and the technical features in the embodiments in the present disclosure may be combined without conflicts. Detailed descriptions in the specific implementations should be understood as explanatory notes for the purpose of the present disclosure and should not be regarded as improper limitations on the present disclosure.

Unless otherwise defined, all technical and scientific terms used herein have the same meaning as commonly understood by those skilled in the art of the present disclosure. The terms used herein are intended only for the purpose of describing specific embodiments and are not intended to limit the present disclosure. The terms "include" and "has/have", as well as any variations thereof are intended to encompass non-exclusive inclusion.

In the description of the embodiments of the present disclosure, the technical terms "first", "second", "third", and the like are only for distinguishing different objects, and may not be understood as indicating or implying the relative importance or implicitly indicating the number, specific order or primary and secondary relations of the technical features indicated. In the description of the embodiments of the present disclosure, "plurality" means two or more, unless otherwise expressly and specifically defined.

Reference herein to "an embodiment" means that a particular feature, structure, or characteristic described in connection with the embodiment may be included in at least one embodiment of the present disclosure. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the descriptions of the embodiments of the present disclosure, the term "and/or" only describes an association relationship of associated objects and represents that three relations may exist. For example, A and/or B may represent three situations: A exists alone; A and B exist simultaneously; and B exists alone. In addition, the character "/" herein usually indicates an "or" relationship between associated objects.

In the description of the embodiments of the present disclosure, orientations or positional relationships indicated by the technical terms "length", "width", "thickness", "upper", "lower", "front", "rear", "left", "right", "vertical", "horizontal", "top", "bottom", "inner", "outer", "circumferential direction", "height direction", "first direction", "second direction", and the like are orientations or positional relationships as shown in the accompanying drawings, and are only for the purpose of facilitating and simplifying the descriptions of the embodiments of the present disclosure instead of indicating or implying that devices or elements indicated need to have particular orientations, and be constructed, operated, or used in the particular orientations, so that these terms are not construed as limiting the embodiments of the present disclosure.

In the description of the embodiments of the present disclosure, unless otherwise expressly specified and defined, the technical terms "mount", "connected to", "connected with", "fixed", or the like should be interpreted in a broad sense. For example, a connection may refer to a fixed connection, a detachable connection or an integral connection; or may refer to a mechanical connection or an electrical connection; or may refer to a direct connection or an indirect connection through an intermediate medium; or may refer to an internal communication between two elements or an interaction relationship between two elements. For those of ordinary skill in the art, the specific meanings of the aforementioned terms in the embodiments of the present disclosure can be understood based on specific conditions.

In the description of the embodiments of the present disclosure, unless otherwise explicitly defined and limited, the technical term "contact" should be interpreted broadly. It may refer to direct contact or contact through an intermediate medium, or may refer to contact, with no interaction force, between two elements that are in contact with each other, or may refer to contact, with an interaction force, between two elements that are in contact with each other.

With the development of clean energy, an increasing number of devices use electricity as driving energy, so that power batteries that can store more electric energy and can be charged and discharged repeatedly for many times have been rapidly developed, such as lithium-ion batteries. The power batteries are used in energy storage power source systems such as hydraulic, thermal, wind, and solar power stations, and are widely applied to electric vehicles such as such as electric bicycles, electric motorcycles, electric automobiles, and many fields such as aerospace. With the continuous expansion of the application field of the power batteries, the market demand is also constantly increasing.

In an embodiment of the present disclosure, a battery cell may be a battery cell. The battery cell refers to a basic unit that can achieve mutual conversion between chemical energy and electrical energy, and may be configured to make a battery module or a battery pack to supply power to an electrical apparatus. The battery cell may be a primary battery or a secondary battery. The secondary battery refers to a battery cell that can be used continually by activating an active material in a charging manner after the battery cell is discharged. The battery cell may be a lithium-ion battery, a sodium-ion battery, a sodium-lithium-ion battery, a lithium metal battery, a sodium metal battery, a lithium-sulfur battery, a magnesium-ion battery, a nickel-metal hydride battery, a nickel-cadmium battery, a lead-acid battery, or the like. This is not limited in the embodiments of the present disclosure. The battery cell may be cylindrical, cuboid, or in other shapes. It can be understood that the battery cell in the embodiments of the present disclosure is a cuboid battery cell.

The battery cell includes an electrode assembly and an electrolyte solution, and the electrode assembly is formed by a positive electrode plate, a negative electrode plate, and a separator. The battery cell works mainly relying on movement of metal ions between the positive electrode plate and the negative electrode plate. The positive electrode plate includes a positive electrode current collector and a positive electrode active substance layer. A surface of the positive electrode current collector is coated with the positive electrode active substance layer. A part of the positive electrode current collector that is not coated with the positive electrode active substance layer protrudes out of a part of the positive electrode current collector that is coated with the positive electrode active substance layer. The part of the positive electrode current collector that is not coated with the positive electrode active substance layer serves as a positive electrode tab. A lithium-ion battery is taken as an example. A material of the positive electrode current collector may be aluminum. A positive electrode active material may be lithium cobalt oxide, lithium iron phosphate, ternary lithium, lithium manganate, or the like. The negative electrode plate includes a negative electrode current collector and a negative electrode active substance layer. A surface of the negative electrode current collector is coated with the negative electrode active substance layer. A part of the negative electrode current collector that is not coated with the negative electrode active substance layer protrudes from a part of the negative electrode current collector that is coated with the negative electrode active substance layer. The part of the negative electrode current collector that is not coated with the negative electrode active substance layer serves as a negative electrode tab. A material of the negative electrode current collector may be copper, and a negative electrode active material may be carbon, silicon, or the like. To ensure conduction of a large current without fusing, a plurality of positive electrode tabs are stacked together, and a plurality of negative electrode tabs are stacked together. The separator may be made of a material such as polypropylene (PP) or polyethylene (PE).

The battery cell further includes a packaging film and a case. The packaging film is wrapped around the electrode assembly, and the case encapsulates the electrode assembly (i.e. a bare battery cell) wrapped around by the packaging film, to form the battery cell. For example, the packaging film may be a mylar film, and the case may be an aluminum case, a steel case, or the like. After the electrode assembly is wound and formed, the encapsulation of the mylar film and the case will be completed through a Mylar wrapping procedure and a casing procedure. The mylar film plays a role in sealing and protecting the electrode assembly, and can effectively insulate the electrode assembly from the case, to avoid short circuiting inside the battery cell. The case achieves a protective effect.

In the related technology, during production of a battery cell, after assembling of a bare battery cell is completed, there is a casing procedure. When the bare battery cell is placed into a case, to protect the bare battery cell and achieve an insulation function, an outer surface of the bare battery cell can be wrapped by a layer of packaging film, and the packaging film is bonded to different surfaces of the bare battery cell and avoid an extension position of a tab. In the related technology, in a process of automatically wrapping the packaging film, falling-off of the packaging film will lead to abnormal quality of the battery cell. Moreover, manual operations are required after the packaging film falls off. This reduces the production efficiency.

An embodiment of the present disclosure provides a film wrapping method for a battery cell, applied to a film wrapping apparatus 10 for a battery cell. The film wrapping apparatus 10 includes a control device, a packaging film feeding compartment 1, a first transfer mechanism 2 with a first suction cup module 21, a second transfer mechanism 3, a hot melt mechanism 4, and a wrapping mechanism 5.

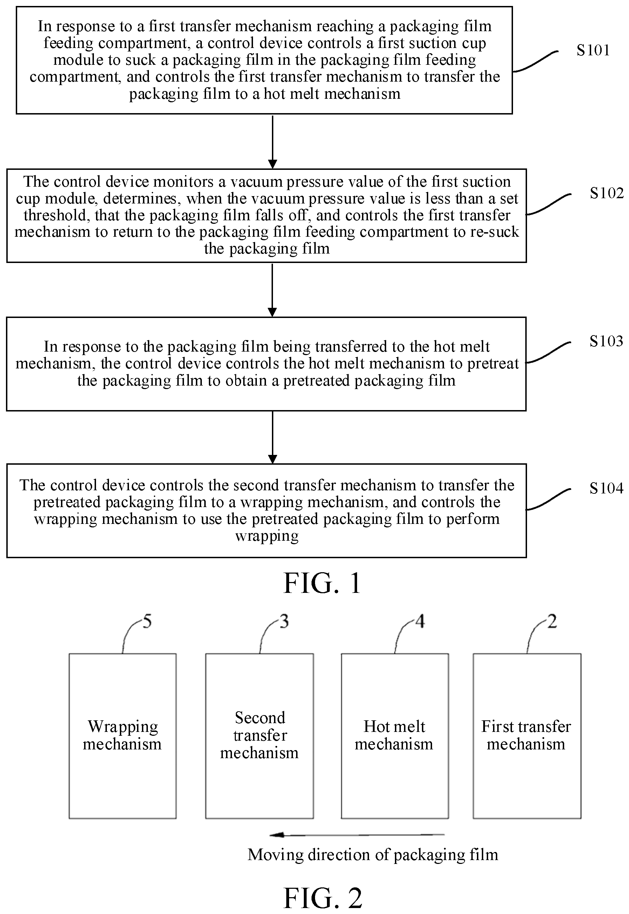

FIG. 1 is a schematic diagram of an implementation flow of a film wrapping method for a battery cell according to an embodiment of the present disclosure. As shown in FIG. 1, the film wrapping method for a battery cell includes step S101 to step S104 below:

In step S101, in response to the first transfer mechanism reaching the packaging film feeding compartment, the control device controls the first suction cup module to suck a packaging film in the packaging film feeding compartment, and controls the first transfer mechanism to transfer the packaging film to the hot melt mechanism.

Herein, the control device is configured to control operation processes of the packaging film feeding compartment 1, the first transfer mechanism 2 and the first suction cup module 21 thereof, the second transfer mechanism 3, the hot melt mechanism 4, and the wrapping mechanism 5. The control device may include but is not limited to at least one of an industrial personal computer, a programmable logic controller (PLC), an upper computer, and the like. The upper computer may include a server, a laptop, a tablet, a desktop computer, a smartphone, and the like.

Herein, a specific structure of the packaging film feeding compartment 1 is not limited herein. The packaging film feeding compartment 1 is configured to store a packaging film 20. For example, a plurality of packaging films 20 are stacked in the packaging film feeding compartment 1.

Plurality in this embodiment of the present disclosure refers to two or more in quantity.

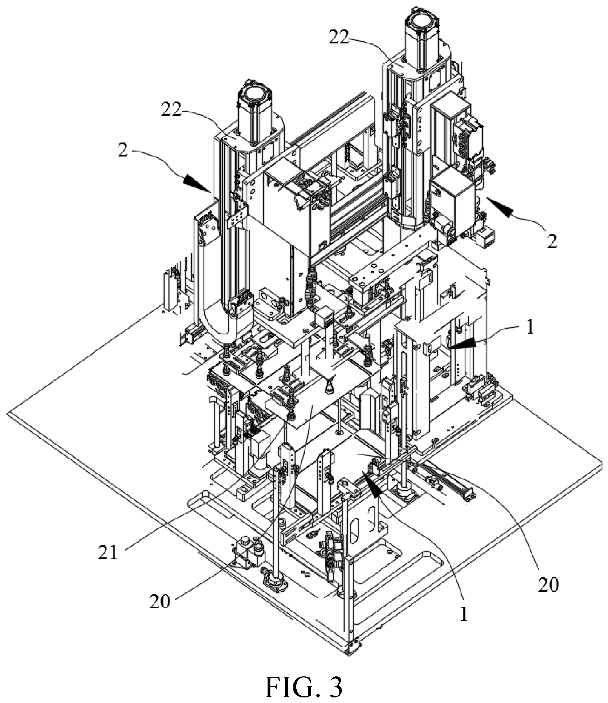

Herein, a specific structure of the first suction cup module 21 is not limited herein. In some embodiments, referring to FIG. 2 and FIG. 3, the first suction cup module 21 includes at least one suction cup and sucks the packaging film 20 through each suction cup.

Certainly, the first transfer mechanism 2 may further include a first moving module. The first moving module drives the first suction cup module 21 to move. For example, it can drive the first suction cup module 21 to move in a height direction and within a horizontal plane.

In step S102, the control device monitors a vacuum pressure value of the first suction cup module, determines, when the vacuum pressure value is less than a set threshold, that the packaging film falls off, and controls the first transfer mechanism to return to the packaging film feeding compartment to re-suck the packaging film.

The control device can be configured to monitor the vacuum pressure value of the first suction cup module 21 in a process that the first transfer mechanism 2 transfers the packaging film 20 to the hot melt mechanism 4. It can be understood that a vacuum pressure of the first suction cup module 21 refers to a force exerted by a vacuum force generated by the suction cup to a unit area. The vacuum pressure is usually measured in pascals (Pa). The vacuum pressure of the suction cup is provided by a vacuum source connected to the suction cup. The vacuum source can extract air inside the suction cup to create a vacuum. The magnitude of the vacuum pressure of the suction cup depends on a suction capacity of the vacuum source and design parameters of the suction cup. It should be noted that as the vacuum pressure increases, the suction force also increases, but at the same time, a contact force between the suction cup and a workpiece also increases. An appropriate vacuum pressure needs to be selected based on an actual need. Thus, when the vacuum pressure value of the first suction cup module 21 is less than the set threshold, the suction force of the first suction cup module 21 decreases until it is insufficient to suck the packaging film 20, thus determining that the packaging film 20 falls off.

After determining that the packaging film 20 falls off, by controlling the first transfer mechanism 2 to return to the packaging film feeding compartment 1 to re-suck the packaging film 20, the control device automatically handles with an abnormal situation of the falling-off of the packaging film 20, without shutdown. This reduces the labor costs and enhances the production efficiency of the battery cell.

In step S103, in response to the packaging film being transferred to the hot melt mechanism, the control device controls the hot melt mechanism to pretreat the packaging film to obtain a pretreated packaging film.

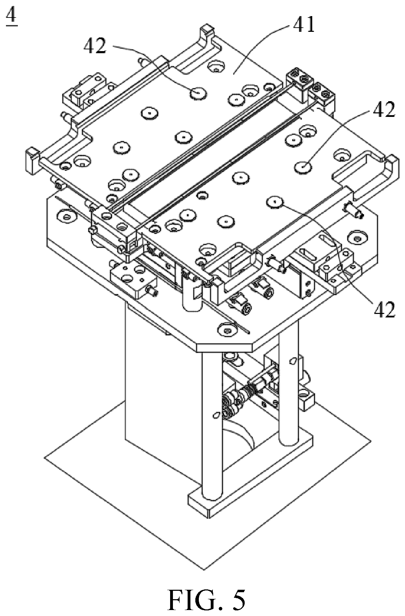

There are various manners for pretreating the packaging film 20 by the hot melt mechanism 4. In some embodiments, referring to FIG. 5, the packaging film 20 and a base support are adhered to each other on the hot melt mechanism 4 to form the pretreated packaging film 20.

In some embodiments, after step S103, an adhesive application step may be included, that is, an adhesive is applied to the pretreated packaging film 20.

In step S104, the control device controls the second transfer mechanism to transfer the pretreated packaging film to the wrapping mechanism, and controls the wrapping mechanism to use the pretreated packaging film to perform wrapping.

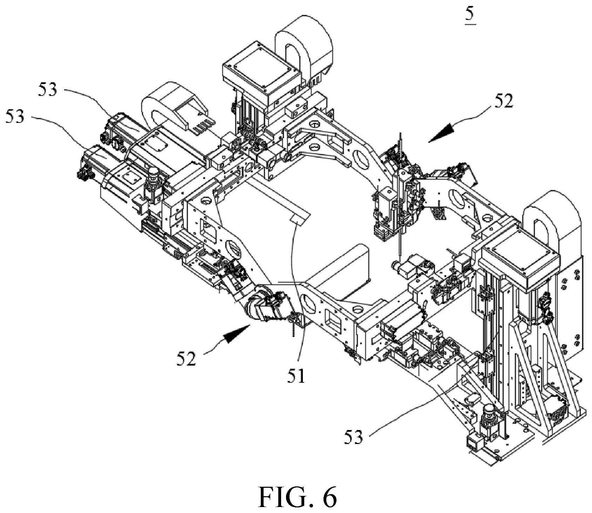

Herein, referring to FIG. 6, that the wrapping mechanism 5 uses the pretreated packaging film 20 to perform wrapping means that the wrapping mechanism 5 wraps around an outer surface of a bare battery cell by using the pretreated packaging film 20, to form the battery cell.

According to the film wrapping method for a battery cell provided in the embodiments of the present disclosure, first, after the first transfer mechanism 2 reaches the packaging film feeding compartment 1, the control device controls the first suction cup module 21 to suck the packaging film 20 in the packaging film feeding compartment 1, and then controls the first transfer mechanism 2 to transfer the packaging film 20 to the hot melt mechanism 4. In addition, in the process that the first transfer mechanism 2 transfers the packaging film 20 to the hot melt mechanism 4, the control device monitors the vacuum pressure value of the first suction cup module 21, determines, if the vacuum pressure value is not less than the set threshold, that the packaging film 20 does not fall off, and controls the first transfer mechanism 2 to continue to transfer the packaging film 20 to the hot melt mechanism 4 until the packaging film 20 is placed on the hot melt mechanism 4; and determines, if the vacuum pressure value is less than the set threshold, that the packaging film 20 falls off, and controls the first transfer mechanism 2 to return to the packaging film feeding compartment 1 to re-suck the packaging film 20. In this way, in one aspect, by monitoring the vacuum pressure value of the first suction cup module 21, the control device determines, based on whether the vacuum pressure value is less than the set threshold, whether the packaging film 20 falls off, so that real-time monitoring on whether the packaging film 20 falls off can be achieved, and a problem of abnormal quality of the battery cell due to falling-off of the packaging film 20 is mitigated. In another aspect, after determining that the packaging film 20 falls off, by controlling the first transfer mechanism 2 to return to the packaging film feeding compartment 1 to re-suck the packaging film 20, the control device automatically handles with an abnormal situation of the falling-off of the packaging film 20, without shutdown. This reduces the labor costs and enhances the production efficiency of the battery cell.

In some embodiments, referring to FIG. 5, the hot melt mechanism 4 includes a hot melt platform 41 and a hot melt suction cup assembly 42 arranged at the hot melt platform 41.

Step S103 described above may include step S111 and step S112 below:
In step S111, in response to the packaging film being transferred to the hot melt platform, the control device controls the hot melt suction cup assembly to suck the packaging film, monitors a vacuum pressure value of the hot melt suction cup assembly, and determines, when the vacuum pressure value is less than the set threshold, that the packaging film falls off.

In step S112, the control device controls the hot melt mechanism to pretreat the packaging film to obtain the pretreated packaging film.

By configuring the hot melt mechanism 4 to include the hot melt platform 41 and the hot melt suction cup assembly 42 arranged at the hot melt platform 41, the packaging film 20 can be pretreated on the hot melt platform 41, and the pretreated packaging film 20 can be obtained. The hot melt suction cup assembly 42 is configured to suck the packaging film 20, to mitigate the problem of the abnormal quality of the battery cell due to the falling-off of the packaging film 20 in the pretreating process.

Herein, a specific structure of the hot melt suction cup assembly 42 is not limited herein. In some embodiments, the hot melt suction cup assembly 42 includes at least one suction cup and sucks the packaging film 20 through each suction cup.

The control device can be configured to monitor a vacuum pressure value of the hot melt suction cup assembly. It can be understood that when the vacuum pressure value of the hot melt suction cup assembly is less than the set threshold, a suction force of the hot melt suction cup assembly decreases until it is insufficient to suck the packaging film 20, thus determining that the packaging film 20 falls off.

In some embodiments, the film wrapping apparatus 10 further includes a warning apparatus.

It should be noted that a specific type of the warning apparatus is not limited herein. For example, the warning apparatus can send a warning signal such as vibration, light, or a sound.

In some embodiments, after the warning apparatus sends a warning signal, the film wrapping apparatus 10 can be shut down for inspection. This is conductive for timely troubleshooting to lower the impact on the production efficiency as much as possible.

Step S103 described above may include step S113 below:
In response to detecting that the packaging film 20 falls off from the hot melt suction cup assembly at least once, the control device controls the warning apparatus to send a warning signal.

Herein, if the control device detects that the packaging film 20 falls off from the hot melt suction cup assembly at least once, it indicates that the film wrapping apparatus 10 may possibly fail, and the warning apparatus sends the warning signal, so that an operator can go to the site to inspect and troubleshoot the failure. It is conductive for timely troubleshooting to lower the impact on the production efficiency as much as possible. Exemplarily, the operator can selectively shut down the film wrapping apparatus 10 for inspection.

Exemplarily, if the control device detects that the packaging film 20 falls off from the hot melt suction cup assembly for continuously three times, the control device controls the warning apparatus to send a warning signal.

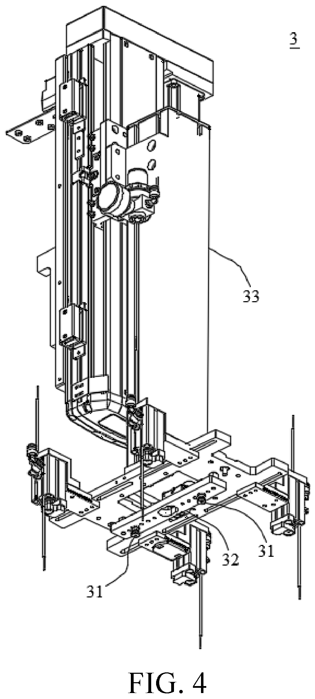

In some embodiments, referring to FIG. 4, the second transfer mechanism 3 has a second suction cup module 31.

Step S104 described above may include step S121 and step S122 below:
In step S121, the control device controls the second suction cup module to suck the pretreated packaging film, and controls the second transfer mechanism to transfer the pretreated packaging film to the wrapping mechanism.

In step S122, the control device monitors a vacuum pressure value of the second suction cup module, determines, when the vacuum pressure value is less than a set threshold, that the pretreated packaging film falls off, and controls the second transfer mechanism to return to the hot melt mechanism to re-suck the pretreated packaging film.

The control device can be configured to monitor the vacuum pressure value of the second suction cup module 31 in the process that the second transfer mechanism 3 transfers the pretreated packaging film 20 to the wrapping mechanism 5. By the arrangement of the second suction cup module 31, in the process that the second transfer mechanism 3 transfers the pretreated packaging film 20 to the wrapping mechanism 5, the second suction cup module 31 can be configured to suck the pretreated packaging film 20. This mitigates the problem of the abnormal quality of the battery cell due to the falling-off of the pretreated packaging film 20 in the process of transferring the pretreated packaging film 20 to the wrapping mechanism 5.

Herein, a specific structure of the second suction cup module 31 is not limited. In some embodiments, referring to FIG. 4, the second suction cup module 31 includes at least one suction cup and sucks the packaging film 20 through each suction cup.

The control device can be configured to monitor the vacuum pressure value of the second suction cup module 31. It can be understood that when the vacuum pressure value of the second suction cup module 31 is less than the set threshold, a suction force of the second suction cup module 31 decreases until it is insufficient to suck the pretreated packaging film 20, thus determining that the pretreated packaging film 20 falls off.

In some embodiments, the film wrapping apparatus 10 further includes a warning apparatus.

It should be noted that a specific type of the warning apparatus is not limited herein. For example, the warning apparatus can send a warning signal such as vibration, light, or a sound.

In some embodiments, after the warning apparatus sends a warning signal, the film wrapping apparatus 10 can be shut down for inspection. This is conductive for timely troubleshooting to lower the impact on the production efficiency as much as possible.

Step S104 described above may include step S123 below:
In response to detecting that the pretreated packaging film 20 falls off from the second suction cup module 31 at least once, the control device controls the warning apparatus to send a warning signal.

Herein, if the control device detects that the packaging film 20 falls off from the second suction cup mode at least once, it indicates that the film wrapping apparatus 10 may possibly fail, and the warning apparatus sends the warning signal, so that an operator can go to the site to inspect and troubleshoot the failure. It is conductive for timely troubleshooting to lower the impact on the production efficiency as much as possible. Exemplarily, the operator can selectively shut down the film wrapping apparatus 10 for inspection.

In some embodiments, referring to FIG. 4, the second transfer mechanism 3 further includes a first detection unit 32. The control device controls the first detection unit 32 to detect whether the pretreated packaging film 20 on the second transfer mechanism 3 falls off.

In the process that the second transfer mechanism 3 transfers the pretreated packaging film 20 to the wrapping mechanism 5, the control device can control the first detection unit 32 to detect whether the pretreated packaging film 20 on the second transfer mechanism 3 falls off. This mitigates the problem of the abnormal quality of the battery cell due to the falling-off of the pretreated packaging film 20 in the process of transferring the pretreated packaging film 20 to the wrapping mechanism 5.

In some embodiments, the control device can determine, by monitoring the vacuum pressure value of the second suction cup module 31 and based on whether the vacuum pressure value is less than the set threshold, whether the pretreated packaging film 20 falls off, and control the first detection unit 32 to detect whether the pretreated packaging film 20 on the second transfer mechanism 3 falls off. That is, the second suction cup module 31 and the first detection unit 32 are simultaneously used to monitor whether the pretreated packaging film 20 falls off, so that the problem of the abnormal quality of the battery cell due to the falling-off of the pretreated packaging film 20 in the process of transferring the pretreated packaging film 20 to the wrapping mechanism 5 is mitigated.

A specific type of the first detection unit 32 is not limited herein. In some embodiments, the first detection unit 32 can be a diffuse reflection detection switch. In some other embodiments, the first detection unit 32 can be a CCD visual inspection system or the like.

In some embodiments, referring to FIG. 6, the wrapping mechanism 5 includes a second detection unit 51.

Step S104 described above may include step S124 to step S125 below:
In step S124, in response to the pretreated packaging film being transferred to a wrapping station of the wrapping mechanism, the control device controls the wrapping mechanism to use the pretreated packaging film to perform wrapping.

In step S125, the second detection unit is controlled to detect whether the pretreated packaging film on the wrapping station falls off.

In the process that the wrapping mechanism 5 uses the pretreated packaging film 20 to perform wrapping, the control device can control the second detection unit 51 to detect whether the pretreated packaging film 20 on the wrapping mechanism 5 falls off. This mitigates the problem of the abnormal quality of the battery cell due to the falling-off of the pretreated packaging film 20 in the process of wrapping of the pretreated packaging film 20.

A specific type of the second detection unit 51 is not limited herein. In some embodiments, referring to FIG. 6, the second detection unit 51 can be a diffuse reflection detection switch. In some other embodiments, the second detection unit 51 can be a CCD visual inspection system or the like.

In some embodiments, the film wrapping apparatus 10 further includes a warning apparatus. In response to detecting that the packaging film 20 falls off from the first suction cup module 21 at least once, the control device controls the warning apparatus to send a warning signal.

It should be noted that a specific type of the warning apparatus is not limited herein. For example, the warning apparatus can send a warning signal such as vibration, light, or a sound.

In some embodiments, after the warning apparatus sends a warning signal, the film wrapping apparatus 10 can be shut down for inspection. This is conductive for timely troubleshooting to lower the impact on the production efficiency as much as possible.

Herein, if the control device detects that the packaging film 20 falls off from the first suction cup module 21 at least once, it indicates that the film wrapping apparatus 10 may possibly fail, and the warning apparatus sends the warning signal, so that an operator can go to the site to inspect and troubleshoot the failure. It is conductive for timely troubleshooting to lower the impact on the production efficiency as much as possible. Exemplarily, the operator can selectively shut down the film wrapping apparatus 10 for inspection.

In a specific embodiment, the film wrapping method for a battery cell includes the following method implementation steps:
In step S131, in response to a first transfer mechanism reaching a packaging film feeding compartment, a control device controls a first suction cup module to suck a packaging film in the packaging film feeding compartment, and controls the first transfer mechanism to transfer the packaging film to a hot melt mechanism.

In step S132, the control device monitors a vacuum pressure value of the first suction cup module, determines, when the vacuum pressure value is less than a set threshold, that the packaging film falls off, and controls the first transfer mechanism to return to the packaging film feeding compartment to re-suck the packaging film.

In step S133, in response to the packaging film being transferred to a hot melt platform of the hot melt mechanism, the control device controls a hot melt suction cup assembly of the hot melt mechanism to suck the packaging film, monitors a vacuum pressure value of the hot melt suction cup assembly, and determines, when the vacuum pressure value is less than the set threshold, that the packaging film falls off.

In step S134, the control device controls the hot melt mechanism to pretreat the packaging film to obtain a pretreated packaging film.

In step S135, the control device controls a second suction cup module to suck the pretreated packaging film, and controls a second transfer mechanism to transfer the pretreated packaging film to a wrapping mechanism.

In step S136, the control device monitors a vacuum pressure value of the second suction cup module, determines, when the vacuum pressure value is less than a set threshold, that the pretreated packaging film falls off, and controls the second transfer mechanism to return to the hot melt mechanism to re-suck the pretreated packaging film.

In step S137, the control device controls a first detection unit of the second transfer mechanism to detect whether the pretreated packaging film on the second transfer mechanism falls off, where step S136 and step S137 can be simultaneously executed.

In step S138, in response to the pretreated packaging film being transferred to a wrapping station of the wrapping mechanism, the control device controls the wrapping mechanism to use the pretreated packaging film to perform wrapping.

In step S139, the control device controls a second detection unit of the wrapping mechanism to detect whether the pretreated packaging film on the wrapping station falls off.

An embodiment of the present disclosure provides a film wrapping apparatus for a battery cell. Referring to FIG. 2 to FIG. 6, the film wrapping apparatus 10 includes a control device, a packaging film feeding compartment 1, a hot melt mechanism 4, a first transfer mechanism 2 with a first suction cup module 21, a second transfer mechanism 3, and a wrapping mechanism 5. The packaging film feeding compartment 1 is configured to store a packaging film 20. The hot melt mechanism 4 is configured to pretreat the packaging film 20 to obtain a pretreated packaging film 20. The wrapping mechanism 5 is configured to use the pretreated packaging film 20 to perform wrapping. The control device is configured to control: the first suction cup module 21 to suck the packaging film 20 in the packaging film feeding compartment 1, and control the first transfer mechanism 2 to transfer the packaging film 20 to the hot melt mechanism 4. The control device is further configured to: monitor a vacuum pressure value of the first suction cup module 21, determine, when the vacuum pressure value is less than a set threshold, that the packaging film 20 falls off, and control the first transfer mechanism 2 to return to the packaging film feeding compartment 1 to re-suck the packaging film 20. The control device controls the second transfer mechanism 3 to transfer the pretreated packaging film 20 to the wrapping mechanism 5.

Herein, the control device is configured to control operation processes of the packaging film feeding compartment 1, the first transfer mechanism 2 and the first suction cup module 21 thereof, the second transfer mechanism 3, the hot melt mechanism 4, and the wrapping mechanism 5. The control device may include but is not limited to at least one of an industrial personal computer, a programmable logic controller (PLC), an upper computer, and the like. The upper computer may include a server, a laptop, a tablet, a desktop computer, a smartphone, and the like.

Herein, a specific structure of the packaging film feeding compartment 1 is not limited. The packaging film feeding compartment 1 is configured to store a packaging film 20. For example, a plurality of packaging films 20 are stacked in the packaging film feeding compartment 1.

Herein, a specific structure of the first suction cup module 21 is not limited. In some embodiments, referring to FIG. 3, the first suction cup module 21 includes at least one suction cup and sucks the packaging film 20 through each suction cup.

Certainly, the first transfer mechanism 2 may further include a first moving module. The first moving module drives the first suction cup module 21 to move. For example, it can drive the first suction cup module 21 to move in a height direction and within a horizontal plane.

Exemplarily, referring to FIG. 3, the first transfer mechanism 2 further includes a first linear module 22. The first transfer mechanism 2 drives the first suction cup module 21 through the first linear module 22. Specifically, the first transfer mechanism 2 drives the first suction cup module 21 to move in a height direction through the first linear module 22.

The control device can be configured to monitor the vacuum pressure value of the first suction cup module 21 in a process that the first transfer mechanism 2 transfers the packaging film 20 to the hot melt mechanism 4. It can be understood that a vacuum pressure of the first suction cup module 21 refers to a force exerted by a vacuum force generated by the suction cup to a unit area. The vacuum pressure is usually measured in pascals (Pa). The vacuum pressure of the suction cup is provided by a vacuum source connected to the suction cup. The vacuum source can extract air inside the suction cup to create a vacuum. The magnitude of the vacuum pressure of the suction cup depends on a suction capacity of the vacuum source and design parameters of the suction cup. It should be noted that as the vacuum pressure increases, the suction force also increases, but at the same time, a contact force between the suction cup and a workpiece also increases. An appropriate vacuum pressure needs to be selected based on an actual need. Thus, when the vacuum pressure value of the first suction cup module 21 is less than the set threshold, the suction force of the first suction cup module 21 decreases until it is insufficient to suck the packaging film 20, thus determining that the packaging film 20 falls off.

After determining that the packaging film 20 falls off, by controlling the first transfer mechanism 2 to return to the packaging film feeding compartment 1 to re-suck the packaging film 20, the control device automatically handles with an abnormal situation of the falling-off of the packaging film 20, without shutdown. This reduces the labor costs and enhances the production efficiency of the battery cell.

There are various manners for pretreating the packaging film 20 by the hot melt mechanism 4. In some embodiments, referring to FIG. 5, the packaging film 20 and a base support are adhered to each other on the hot melt mechanism 4 to form the pretreated packaging film 20.

Herein, that the wrapping mechanism 5 uses the pretreated packaging film 20 to perform wrapping means that the wrapping mechanism 5 wraps around an outer surface of a bare battery cell by using the pretreated packaging film 20, to form the battery cell.

According to the film wrapping apparatus for a battery cell provided in the embodiments of the present disclosure, first, after the first transfer mechanism 2 reaches the packaging film feeding compartment 1, the control device controls the first suction cup module 21 to suck the packaging film 20 in the packaging film feeding compartment 1, and then controls the first transfer mechanism 2 to transfer the packaging film 20 to the hot melt mechanism 4. In addition, in the process that the first transfer mechanism 2 transfers the packaging film 20 to the hot melt mechanism 4, the control device monitors the vacuum pressure value of the first suction cup module 21, determines, if the vacuum pressure value is not less than the set threshold, that the packaging film 20 does not fall off, and controls the first transfer mechanism 2 to continue to transfer the packaging film 20 to the hot melt mechanism 4 until the packaging film 20 is placed on the hot melt mechanism 4; and determines, if the vacuum pressure value is less than the set threshold, that the packaging film 20 falls off, and controls the first transfer mechanism 2 to return to the packaging film feeding compartment 1 to re-suck the packaging film 20. In this way, in one aspect, by monitoring the vacuum pressure value of the first suction cup module 21, the control device determines, based on whether the vacuum pressure value is less than the set threshold, whether the packaging film 20 falls off, so that real-time monitoring on whether the packaging film 20 falls off can be achieved, and a problem of abnormal quality of the battery cell due to falling-off of the packaging film 20 is mitigated. In another aspect, after determining that the packaging film 20 falls off, by controlling the first transfer mechanism 2 to return to the packaging film feeding compartment 1 to re-suck the packaging film 20, the control device automatically handles with an abnormal situation of the falling-off of the packaging film 20, without shutdown. This reduces the labor costs and enhances the production efficiency of the battery cell.

In some embodiments, referring to FIG. 5, the hot melt mechanism 4 includes a hot melt platform 41 and a hot melt suction cup assembly 42 arranged at the hot melt platform 41. The hot melt platform 41 is configured to carry the packaging film 20. The control device is configured to: control the hot melt suction cup assembly 42 to suck the packaging film 20, monitor a vacuum pressure value of the hot melt suction cup assembly, and determine, when the vacuum pressure value is less than the set threshold, that the packaging film 20 falls off.

Herein, a specific structure of the hot melt suction cup assembly 42 is not limited. In some embodiments, the hot melt suction cup assembly 42 includes at least one suction cup and sucks the packaging film 20 through each suction cup.

By configuring the hot melt mechanism 4 to include the hot melt platform 41 and the hot melt suction cup assembly 42 arranged at the hot melt platform 41, the packaging film 20 can be pretreated on the hot melt platform 41, and the pretreated packaging film 20 can be obtained. The hot melt suction cup assembly 42 is configured to suck the packaging film 20 to reduce the possibility of falling-off of the packaging film 20 in the pretreating process. The control device can be configured to monitor the vacuum pressure value of the hot melt suction cup assembly. When the vacuum pressure value of the hot melt suction cup assembly is less than the set threshold, a suction force of the hot melt suction cup assembly decreases until it is insufficient to suck the packaging film 20, thus determining that the packaging film 20 falls off. This mitigates the problem of the abnormal quality of the battery cell due to the falling-off of the packaging film 20 in the pretreating process.

In some embodiments, referring to FIG. 4, the second transfer mechanism 3 has a second suction cup module 31. The control device is configured to: control the second suction cup module 31 to suck the pretreated packaging film 20, monitor a vacuum pressure value of the second suction cup module 31, and determine, when the vacuum pressure value is less than the set threshold, that the pretreated packaging film 20 falls off.

Herein, a specific structure of the second suction cup module 31 is not limited. In some embodiments, the second suction cup module 31 includes at least one suction cup and sucks the packaging film 20 through each suction cup.

The control device can be configured to monitor the vacuum pressure value of the second suction cup module 31 in the process that the second transfer mechanism 3 transfers the pretreated packaging film 20 to the wrapping mechanism 5. By the arrangement of the second suction cup module 31, in the process that the second transfer mechanism 3 transfers the pretreated packaging film 20 to the wrapping mechanism 5, the second suction cup module 31 can be configured to suck the pretreated packaging film 20. This mitigates the problem of the abnormal quality of the battery cell due to the falling-off of the pretreated packaging film 20 in the process of transferring the pretreated packaging film 20 to the wrapping mechanism 5. The control device can be configured to monitor the vacuum pressure value of the second suction cup module 31. It can be understood that when the vacuum pressure value of the second suction cup module 31 is less than the set threshold, a suction force of the second suction cup module 31 decreases until it is insufficient to suck the pretreated packaging film 20, thus determining that the pretreated packaging film 20 falls off.

In some embodiments, referring to FIG. 4, the second transfer mechanism 3 further includes a first detection unit 32 arranged on one side of the second suction cup module 31. The first detection unit 32 is configured to detect whether the pretreated packaging film 20 on the second suction cup module 31 falls off.

A specific type of the first detection unit 32 is not limited herein. In some embodiments, referring to FIG. 4, the first detection unit 32 can be a diffuse reflection detection switch. In some other embodiments, the first detection unit 32 can be a CCD visual inspection system or the like.

In the process that the second transfer mechanism 3 transfers the pretreated packaging film 20 to the wrapping mechanism 5, the control device can control the first detection unit 32 to detect whether the pretreated packaging film 20 on the second suction cup module 31 falls off. This mitigates the problem of the abnormal quality of the battery cell due to the falling-off of the pretreated packaging film 20 in the process of transferring the pretreated packaging film 20 to the wrapping mechanism 5.

Exemplarily, referring to FIG. 4, the second transfer mechanism 3 further includes a second linear module 33. The second transfer mechanism 3 drives the second suction cup module 31 through the second linear module 33. Specifically, the second transfer mechanism 3 drives the second suction cup module 31 to move in the height direction through the second linear module 33.

In some embodiments, referring to FIG. 6, the wrapping mechanism 5 includes a wrapping station and a second detection unit 51 arranged on one side of the wrapping station. The control device is configured to control the second detection unit 51 to be configured to detect whether the pretreated packaging film 20 on the wrapping station falls off.

A specific type of the second detection unit 51 is not limited herein. In some embodiments, referring to FIG. 6, the second detection unit 51 can be a diffuse reflection detection switch. In some other embodiments, the second detection unit 51 can be a CCD visual inspection system or the like.

In the process that the wrapping mechanism 5 uses the pretreated packaging film 20 to perform wrapping, the control device can control the second detection unit 51 to detect whether the pretreated packaging film 20 on the wrapping mechanism 5 falls off. This mitigates the problem of the abnormal quality of the battery cell due to the falling-off of the pretreated packaging film 20 in the process of wrapping of the pretreated packaging film 20.

Exemplarily, referring to FIG. 6, the wrapping mechanism 5 includes a third linear module 53 and a wrapping portion 52. The wrapping mechanism 5 drives the wrapping portion 52 through the third linear module 53 to wrap the battery cell.

In the description of the present disclosure, the descriptions with reference to the terms such as "an embodiment", "in some embodiments", "in some other embodiments", and "in still some other embodiments" mean that specific features, structures, materials, or characteristics described in combination with the embodiment or examples are included in at least one embodiment or example of the present disclosure. In the present disclosure, exemplary expressions of the above terms do not necessarily refer to the same embodiment or example. Furthermore, the specific features, structures, materials, or characteristics described may be combined in any suitable manner in any one or more embodiments or examples. In addition, those skilled in the art may combine the different embodiments or examples described in the present disclosure, as well as the features of different embodiments or examples, without mutual contradictions.

The above descriptions are only exemplary embodiments of the present disclosure, and are not intended to limit the present disclosure. Those skilled in the art can make various changes and transformations on the present disclosure. Any modification, equivalent replacement, and improvement made within the spirit and principle of the present disclosure shall fall within the protection scope of the present disclosure.

## Claims

1. A film wrapping method for a battery cell, applied to a film wrapping apparatus, wherein the film wrapping apparatus comprises a control device, a packaging film feeding compartment, a first transfer mechanism with a first suction cup module, a second transfer mechanism, a hot melt mechanism, and a wrapping mechanism, the film wrapping method comprising:
controlling, by the control device in response to the first transfer mechanism reaching the packaging film feeding compartment, the first suction cup module to suck a packaging film in the packaging film feeding compartment, and controlling the first transfer mechanism to transfer the packaging film to the hot melt mechanism;
monitoring, by the control device, a vacuum pressure value of the first suction cup module, determining, when the vacuum pressure value is less than a set threshold, that the packaging film falls off, and controlling the first transfer mechanism to return to the packaging film feeding compartment to re-suck the packaging film;
controlling, by the control device in response to the packaging film being transferred to the hot melt mechanism, the hot melt mechanism to pretreat the packaging film to obtain a pretreated packaging film; and
controlling, by the control device, the second transfer mechanism to transfer the pretreated packaging film to the wrapping mechanism, and controlling the wrapping mechanism to use the pretreated packaging film to perform wrapping.

2. The film wrapping method for a battery cell according to claim 1, wherein the hot melt mechanism comprises a hot melt platform and a hot melt suction cup assembly arranged at the hot melt platform;
the controlling, by the control device in response to the packaging film being transferred to the hot melt mechanism, the hot melt mechanism to pretreat the packaging film to obtain a pretreated packaging film comprises:
in response to the packaging film being transferred to the hot melt platform, controlling, by the control device, the hot melt suction cup assembly to suck the packaging film, monitoring a vacuum pressure value of the hot melt suction cup assembly, and determining, when the vacuum pressure value is less than the set threshold, that the packaging film falls off; and
controlling, by the control device, the hot melt mechanism to pretreat the packaging film to obtain the pretreated packaging film.

3. The film wrapping method for a battery cell according to claim 2, wherein the film wrapping apparatus further comprises a warning apparatus; and in response to detecting that the packaging film falls off from the hot melt suction cup assembly at least once, the control device controls the warning apparatus to send a warning signal.

4. The film wrapping method for a battery cell according to any one of claims 1 to 3, wherein the second transfer mechanism has a second suction cup module;
the controlling, by the control device, the second transfer mechanism to transfer the pretreated packaging film to the wrapping mechanism comprises:
controlling, by the control device, the second suction cup module to suck the pretreated packaging film, and controlling the second transfer mechanism to transfer the pretreated packaging film to the wrapping mechanism; and
monitoring, by the control device, a vacuum pressure value of the second suction cup module, determining, when the vacuum pressure value is less than the set threshold, that a pretreated packaging film falls off, and controlling the second transfer mechanism to return to the hot melt mechanism to re-suck the pretreated packaging film.

5. The film wrapping method for a battery cell according to claim 4, wherein the film wrapping apparatus further comprises a warning apparatus; and in response to detecting that the pretreated packaging film falls off from the second suction cup module at least once, the control device controls the warning apparatus to send a warning signal.

6. The film wrapping method for a battery cell according to any one of claims 1 to 5, wherein the second transfer mechanism further comprises a first detection unit; and the control device controls the first detection unit to detect whether the pretreated packaging film on the second transfer mechanism falls off.

7. The film wrapping method for a battery cell according to claim 6, wherein the first detection unit is a diffuse reflection detection switch.

8. The film wrapping method for a battery cell according to any one of claims 1 to 7, wherein the wrapping mechanism comprises a second detection unit; and
the controlling the wrapping mechanism to use the pretreated packaging film to perform wrapping comprises:
in response to the pretreated packaging film being transferred to a wrapping station of the wrapping mechanism, controlling, by the control device, the wrapping mechanism to use the pretreated packaging film to perform wrapping; and
controlling the second detection unit to detect whether the pretreated packaging film on the wrapping station falls off.

9. The film wrapping method for a battery cell according to claim 8, wherein the second detection unit is a diffuse reflection detection switch.

10. The film wrapping method for a battery cell according to any one of claims 1 to 9, wherein the film wrapping apparatus further comprises a warning apparatus; and in response to detecting that the packaging film falls off from the first suction cup module at least once, the control device controls the warning apparatus to send a warning signal.

11. A film wrapping apparatus for a battery cell, comprising:
a control device;
a packaging film feeding compartment configured to store a packaging film;
a hot melt mechanism configured to pretreat the packaging film to obtain a pretreated packaging film;
a wrapping mechanism configured to use the pretreated packaging film to perform wrapping;
a first transfer mechanism with a first suction cup module, wherein the control device is configured to: control the first suction cup module to suck the packaging film in the packaging film feeding compartment and control the first transfer mechanism to transfer the packaging film to the hot melt mechanism; the control device is further configured to: monitor a vacuum pressure value of the first suction cup module, determine, when the vacuum pressure value is less than a set threshold, that the packaging film falls off, and control the first transfer mechanism to return to the packaging film feeding compartment to re-suck the packaging film; and
a second transfer mechanism, wherein the control device controls the second transfer mechanism to transfer the pretreated packaging film to the wrapping mechanism.

12. The film wrapping apparatus for a battery cell according to claim 11, wherein the hot melt mechanism comprises a hot melt platform and a hot melt suction cup assembly arranged at the hot melt platform;
the hot melt platform is configured to carry the packaging film; and the control device is configured to: control the hot melt suction cup assembly to suck the packaging film, monitor a vacuum pressure value of the hot melt suction cup assembly, and determine, when the vacuum pressure value is less than the set threshold, that the packaging film falls off.

13. The film wrapping apparatus for a battery cell according to claim 11 or 12, wherein the second transfer mechanism has a second suction cup module; and
the control device is configured to: control the second suction cup module to suck the pretreated packaging film, monitor a vacuum pressure value of the second suction cup module, and determine, when the vacuum pressure value is less than a set threshold, that the pretreated packaging film falls off.

14. The film wrapping apparatus for a battery cell according to claim 13, wherein the second transfer mechanism further comprises a first detection unit arranged on one side of the second suction cup module; and the first detection unit is configured to detect whether the pretreated packaging film on the second suction cup module falls off.

15. The film wrapping apparatus for a battery cell according to claim 13 or 14, wherein the wrapping mechanism comprises a wrapping station and a second detection unit arranged on one side of the wrapping station; and the second detection unit is configured to detect whether the pretreated packaging film on the wrapping station falls off.

16. The film wrapping apparatus for a battery cell according to claim 15, wherein the second detection unit is a diffuse reflection detection switch or a charge coupled device (CCD) visual inspection system.

17. The film wrapping apparatus for a battery cell according to claim 14, wherein the first detection unit is a diffuse reflection detection switch or a CCD visual inspection system.

18. The film wrapping apparatus for a battery cell according to any one of claims 11 to 17, wherein the film wrapping apparatus further comprises a warning apparatus; and the control device is configured to control the warning apparatus to send a warning signal.
